## Europäisches Patentamt

## European Patent Office

## Office européen des brevets

(11) Veröffentlichungsnummer: **0 271 479**
**A1**

(12) **EUROPÄISCHE PATENTANMELDUNG**

(21) Anmeldenummer: 87890269.1

(22) Anmeldetag: 25.11.87

(51) Int. Cl.4: **F 16 K 11/04**
F 15 B 13/02

(30) Priorität: 27.11.86 AT 3169/86

(43) Veröffentlichungstag der Anmeldung:
15.06.88 Patentblatt 88/24

(84) Benannte Vertragsstaaten:
CH DE ES FR GB IT LI

(71) Anmelder: **HOERBIGER VENTILWERKE
AKTIENGESELLSCHAFT**
**Braunhubergasse 23**
**A-1110 Wien (AT)**

(72) Erfinder: **Frisch, Herbert**
**Reibergasse 9**
**A-1238 Wien (AT)**

(74) Vertreter: **Klein, Adam, Dipl.Ing.**
**Fasangasse 49**
**A-1030 Wien (AT)**

(54) **Zweistellungs-Sitzventil.**

(57) Um mit minimalen Umschaltkräften auskommen zu können, ist jeweils einer der zusammengehörigen Dichtbereiche am Schaltkörper (5, 5′) bzw. am Ventilgehäuse (3, 3′) eines Zweistellungs-Sitzventils in Form einer umlaufenden Schneide (8) mit im Querschnitt kleinen Kantenradius ausgeführt, was nur sehr geringe Kräfte zum Dichthalten des Ventils erfordert. Insbesonders im Zusammenhang mit einer druckausgeglichenen Bauweise ergibt sich damit die Möglichkeit sehr geringe Steuerenergien maximal zu verstärken.

Fig. 1

**Beschreibung**

"Zweistellungs-Sitzventil"

Die Erfindung betrifft ein Zweistellungs-Sitzventil, mit einem die zu steuernden Mediumanschlüsse aufweisenden Ventilgehäuse und einem in axialer Richtung zur Umschaltung in einem Gehäuseinnenraum bewegbaren Schaltkörper, welcher zumindest einen, im wesentlichen in einer senkrecht zur Bewegungsrichtung des Schaltkörpers gelegenen Ebene liegenden Dichtbereich aufweist, der in seiner geschlossenen Stellung an einem im wesentlichen gegenüber dem Ventilgehäuse feststehenden Dichtbereich anliegt, wobei die zu steuernden Mediumanschlüsse zu beiden Seiten des feststehenden Dichtbereichs in den Gehäuseinnenraum münden.

Um geringe Steuerenergien, wie sie insbesonders bei pneumatischen Anlagen auftreten, maximal zu verstärken, sind Wegeventile erforderlich, die eine große Nennweite haben und deren Betätigungselemente mit wenig Steuermedium auskommen. Bei Ventilen mit Membranbetätigung bedeutet dies etwa einen kleinen Membrandurchmesser, einen kleinen Hub, einen geringen Steuerdruck und einen geringen Schadraum.

Mit Sitzventilen kann man zwar große Nennweiten bei kleinem Hub der Betätigungselemente schalten, wodurch aber noch nicht alle der genannten Anforderungen erfüllbar sind. Damit etwa für den Fall der Membranbetätigung des Ventils mit einer kleinen Membranfläche und mit geringem Steuerdruck ausgekommen werden kann, muß das Sitzventil mit minimalen Umschaltkräften zu betreiben sein. Als Basis zur Erfüllung all der genannten Anforderungen eignet sich nach heutigen Wissensstand am besten ein druckausgeglichenes Sitzventil, dessen prinzipielle Ausführung an sich bekannt ist - siehe beispielsweise EP 0 110 139 B1. Der Vorteil bei derartigen druckausgeglichenen Ventilen ist, daß der Zuluftdruck keinen Einfluß auf die notwendige Umschaltkraft hat. Als Nachteil sind die relativ hohen Kräfte zum Dichten der Sitze und zum Überwinden der Umschaltreibung sowie zufolge von Toleranzen unterschiedlich große Hübe, deren Ausgleich wiederum den Schadraum vergrößert, zu nennen.

Aufgabe der vorliegenden Erfindung ist es, ein Zweistellungs-Sitzventil der Eingangs genannten Art so zu verbessern, daß die angeführten Nachteile der bekannten derartigen Anordnungen vermieden werden und daß insbesonders sichergestellt wird, daß mit einfachen und kostengünstigen Mitteln ein nur geringe Steuerenergie benötigendes und trotzdem zuverlässig arbei tendes Ventil erhalten wird.

Dies wird gemäß der vorliegenden Erfindung dadurch erreicht, daß jeweils einer der zusammengehörigen Dichtbereiche am Schaltkörper bzw. am Ventilgehäuse in Form einer umlaufenden Schneide mit im Querschnitt kleinem Kantenradius ausgeführt ist. Zufolge der damit einseitig schneidenförmigen Dichtung zwischen Schaltkörper und Ventilgehäuse kann mit sehr geringen Dichtkräften gearbeitet werden, die aber trotzdem noch eine zuverlässige Abdichtung gewährleisten. Damit können auch die Umschaltkräfte sehr gering gehalten werden, was z.B. bei Membranbetätigung wenig Steuerluft und einen geringen Steuerdruck erfordert.

Gemäß einer weiteren bevorzugten Ausgestaltung der Erfindung ist vorgesehen, daß der schneidenförmige Dichtbereich am Schaltkörper und der feststehende Dichtbereich an einem im Ventilgehäuse eingespannten Dichtring aus elastischem Material angeordnet ist. Damit das Sitzventil in der oben genannten Weise mit geringen Dichtkräften noch sicher funktionieren kann, darf der schneidenförmige Dichtbereich weder wellig noch schartig oder dergleichen sein. Da der Schaltkörper üblicherweise aus hartem Werkstoff, wie etwa Stahl, zerspanend als Drehteil gefertigt wird, kann mit der genannten Ausgestaltung auf einfache Weise eine gute Abdichtung zwischen den beiden jeweils zusammengehörigen Dichtbereichen erzielt werden. Bei der genannten zerspanenden Fertigung aus Stahl oder dergleichen ist es auch möglich, die Toleranzen des Abstandes der schneidenförmigen Dichtbereiche am Schaltkörper zueinander, welche wesentlich die Gesamthubtoleranzen mitbestimmen, klein zu halten und eine hohe Qualität des Sitzventils zu erreichen.

Nach einer anderen Weiterbildung der Erfindung ist der Durchmesser des schneidenförmigen Dichtbereiches im wesentlichen gleich groß wie der Durchmesser des im Gehäuseinnenraum abgedichteten Führungsbereiches des Schaltkörpers, womit sich auf einfache und vorteilhafte Weise eine druckausgeglichene Betätigung des Schaltkörpers ergibt.

Bei Ausbildung des Ventils als 3/2-Wegeventil ist nach einer weiteren vorteilhaften Ausgestaltung der Erfindung vorgesehen, daß zwei schneidenförmige Dichtbereiche des Schaltkörpers - in Bewegungsrichtung desselben gesehen - innerhalb von zwei zugehörigen Dichtringen liegen und daß zwischen den beiden Dichtrin gen ein Distanzring im Ventilgehäuse eingespannt ist, der zumindest eine seitliche Ausnehmung aufweist, die in einen der Mediumanschlüsse ausmündet. Die Dichtringe an der Zu- und an der Abluftseite haben damit jeweils Doppelfunktion; sie dichten bei entsprechender Stellung des Schaltkörpers Zuluft bzw. Abluft gegen den mittleren Mediumanschluß und gleichzeitig jeweils den Distanzring im Ventilgehäuse ab. Der Abstand zwischen den beiden Einspannflächen des Distanzringes für die Dichtringe, dessen Toleranzen wiederum sehr wesentlich die Hubtoleranzen des Schaltkörpers beeinflussen, ist bei der Fertigung leicht kontrollierbar. Weiters kann durch eine entsprechende Formgebund der Einspannflächen des Distanzringes leicht sichergestellt werden, daß die Dichtungsringe selbst im eingespannten Zustand eben bleiben, was sich ebenfalls sehr positiv dahingehend auswirkt, daß die Dichtkräfte nicht zur sicheren Abdichtung erhöht werden müssen.

Am Ventilgehäuse und/oder am Distanzring können nach einer weiteren Ausgestaltung der Erfindung Abstützabsätze zur Begrenzung der Zusammendrückung des Dichtringes vorgesehen sein, die im zusammengebauten Zustand des Ventils am jeweils anderen Bauteil anliegen. Diese Abstützabsätze begrenzen nicht nur die Zusammendrückbarkeit der Dichtungen, wodurch deren Form trotz ihrer Elastizität gewahrt bleibt, sondern übertragen auch die Kräfte mit denen das Gehäuse zusammengehalten wird über unelastische Teile.

An den Einspannflächen für den Dichtring am Ventilgehäuse und/oder am Distanzring können nach einer anderen bevorzugten Weiterbildung der Erfindung umlaufende Dichtkanten vorgesehen sein, welche die Dichtheit verbessern ohne daß die Gefahr einer Verquetschung der Dichtringe besteht. Damit sich der zuluftseitige Dichtring auch bei geöffnetem Zuluftquerschnitt nicht durchstülpt kann in weiterer Ausbildung der Erfindung vorgesehen sein, daß die Einspannfläche für den zuluftseitigen Dichtring an der Seite des schneidenförmigen Dichtbereiches in eine Unterstützungsschulter ausläuft, die bis nahe an den schneidenförmigen Dichtbereich heranreicht.

Um in einem weiten Druckbereich ein symmetrisches, schnappendes Umschaltverhalten des Sitzventils zu erreichen, kann nach einer weiteren bevorzugten Ausbildung der Erfindung vorgesehen werden, daß der zuluftseitige schneidenförmige Dichtbereich etwas kleineren und der abluftseitige schneidenförmigen Dichtbereich etwas größeren Durchmesser als der im Gehäuseinnenraum abgedichtete Führungsbereich des Schaltkörpers aufweist und daß der Schaltkörper in unbetätigtem Zustand von einer in axialer Richtung wirkenden Feder in seine, die Zuluft sperrende Endstellung gedrückt ist, wobei in dieser Stellung die Federkraft etwa die Hälfte der vom Betätigungssystem aufbringbaren Kraft ausmacht.

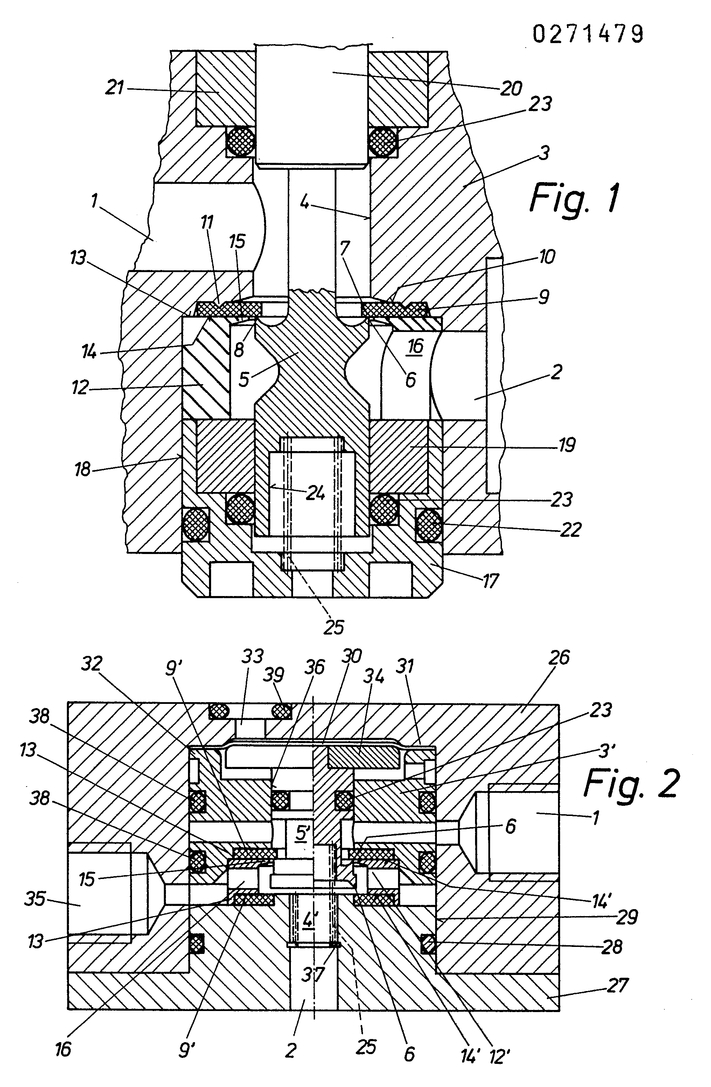

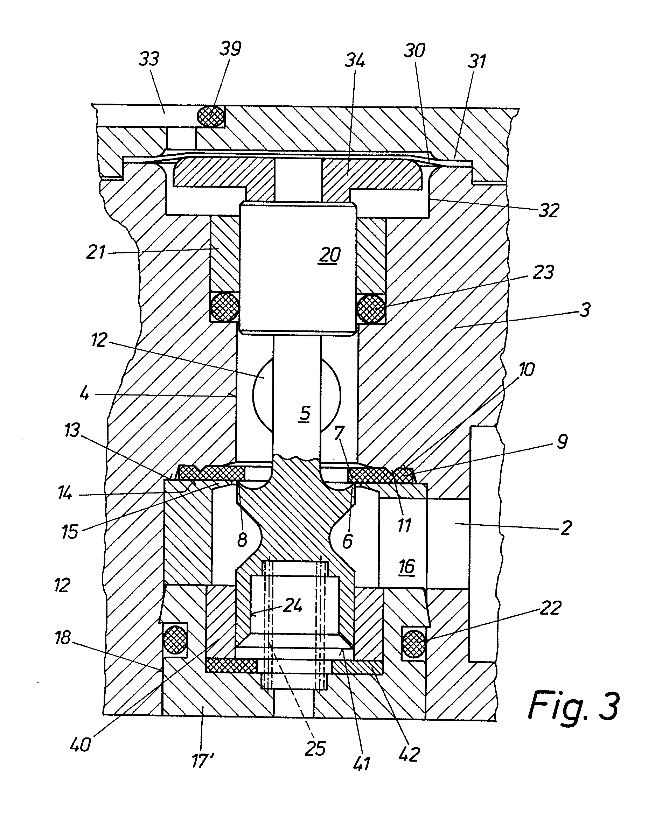

Die Erfindung wird im folgenden anhand der in den Zeichnungen teilweise schematisch dargestellten Ausführungsbeispiele näher erläutert. Fig. 1 zeigt einen teilweisen Längsschnitt durch ein 2/2-Wegeventil in erfindungsgemäßer Ausführung, Fig. 2 zeigt einen entsprechenden Schnitt durch ein erfindungsgemäß ausgeführtes 3/2-Wegeventil und Fig. 3 zeigt eine der Fig. 1 ähnliche Ausführung eines 2/2-Wegeventils nach der Erfindung.

Das Zweistellungs-Sitzventil nach Fig. 1 weist ein die zu steuernden Mediumanschlüsse 1,2 tragendes Ventilgehäuse 3 sowie einen in axialer Richtung zur Umschaltung in einem Gehäuseinnenraum 4 bewegbaren Schaltkörper 5 auf. Dieser Schaltkörper 5 trägt hier einen in einer senkrecht zu seiner Bewegungsrichtung gelegenen Ebene liegenden Dichtbereich 6, der in der dargestellten geschlossenen Stellung an einem im wesentlichen gegenüber dem Ventilgehäuse 3 feststehenden Dichtbereich 7 anliegt. Die zu beiden Seiten des feststehenden Dichtbereichs 7 in den Gehäuseinnenraum 4 einmündenden, zu steuernden Mediumanschlüsse 1,2 haben in der dargestellten geschlossenen Ventilstellung also keine Verbindung.

Der Dichtbereich 6 am Schaltkörper 5 ist in Form einer umlaufenden Schneide 8 mit im Querschnitt kleinem Kantenradius ausgeführt, wogegen der Dichtbereich 7 am Ventilgehäuse 3 an einem im Ventilgehäuse 3 eingespannten Dichtring 9 aus elastischem Material angeordnet ist. Zufolge dieser Ausgestaltung der Dichtung kann mit sehr kleinen Dichtkräften das Auslangen gefunden werden, da der schneidenförmige Dichtbereich 6 bereits bei kleinen zwischen ihm und dem Dichtring 9 wirkenden Kräften sich ausreichend gegen das elastische Material des Dichtrings 9 legt und sicher abdichtet.

Der Dichtring 9 wird in der dargestellten Ausführung nach Fig. 1 von unten her eingebaut, wobei an der Einspannfläche 10 am Ventilgehäuse 3 eine umlaufende Dichtkante 11 zur Verbesserung der Abdichtung an dieser Stelle beiträgt, ohne daß größere Einspannkräfte aufgewendet werden müßten, welche die Gefahr einer Verformung des eigentlichen Dichtbereichs 7 mit sich bringen könnten. An der der Einspannfläche 10 gegenüberliegenden Seite wird der Dichtring 9 von einem Distanzring 12 gehalten, der gegen einen Abstützabsatz 13 des Ventilgehäuses 3 drückt, womit die Zusammendrückbarkeit der elastischen Dichtung 9 auf das durch die Höhe dieses Abstützabsatzes 13 vorgegebene Maß begrenzt ist. Die Einspannfläche 14 für den Dichtring 9 läuft dabei in eine Unterstützungsschulter 15 aus, die bis nahe an den schneidenförmigen Dichtbereich 6 heranreicht. Da in der dargestellten Ausführung üblicherweise der Mediumanschluß 1 Zuluft führen wird, ist mit der genannten Maßnahme sichergestellt, daß auch bei geöffnetem Ventil kein Durchstülpen des Dichtringes 9 auftreten kann.

Der an der Seite des Mediumanschlusses 2 eine seitliche Ausnehmung 16 aufweisende Distanzring 12 ist an der dem Dichtring 9 abgewandten Unterseite mit einem Deckelteil 17 in Verbindung, der auf nicht dargestellte Weise in der Aufnahmebohrung 18 des Ventilgehäuses 3 befestigt ist und die erforderliche Einspannkraft für den Dichtring 9 aufbringt. Eine in diesem Deckelteil 17 eingesetzte Führungsbüchse 19 dient zur axialen Führung des unteren Bereichs des Schaltkörpers 5, der in seinem in der Darstellung oberen Teil einen zweiten Führungsbereich 20 aufweist, der in einer weiteren Führungsbüchse 21 axial gleiten kann.

Der Deckelteil 17 ist mittels einer O-Ringdichtung 22 gegenüber der Aufnahmebohrung 18 abgedichtet. Zur Abdichtung des Schaltkörpers 5 sind an seinen beiden Führungsbereichen O-Ringe 23 vorgesehen - der Durchmesser beider abgedichteter Führungsbereiche des Schaltkörpers 5 ist in der dargestellten Ausführung gleich groß wie der Durchmesser des schneidenförmigen Dichtbereichs 6, sodaß die Drücke an den Mediumanschlüssen 1 und 2 keinerlei Einfluß auf die Dichtkraft bzw. die Umschaltkraft des Ventils haben können.

Im in der Darstellung unteren Bereich des Schaltkörpers 5 weist dieser eine stirnseitige Ausdrehung 24 auf, in welcher eine einerseits am Deckelteil 17 und andererseits am Schaltkörper 5 abgestützte Feder 25 angeordnet ist, die den Schaltkörper 5 in seiner Ruhestellung gegen den Dichtring 9 gedrückt hält. Bei Betätigung des Schaltkörpers 5 zum Öffnen des Ventils, was über hier nicht dargestellte, übliche Einrichtungen - wie etwa eine über einen Steuerdruck belastbare Membran, einen Magneten, oder dergleichen - geschehen kann, wird der Schaltkörper 5 entgegen der Kraft der Feder 25 nach unten bewegt, womit der Dichtbereich 6 vom Dichtbereich 7 abhebt und die Durchströmung freigibt.

Zufolge der dargestellten Ausführen kann mit sehr geringen Dichtkräften und folglich sehr geringen Schaltkräften das Auslangen gefunden werden, was insbesonders Vorteile im Zusammenhang mit der Verstärkung von geringen pneumatischen Steuerenergien bedeutet.

Bei der Ausführung nach Fig. 2 ist ein inneres Ventilgehäuse 3' in einem äußeren Gehäuse 26 eingesetzt und mittels eines Deckels 27, der in der Einsatzbohrung 29 mit einem Dichtring 28 abgedichtet ist, so festgehalten, daß eine Membran 30 zwischen einem umlaufenden Absatz 31 am Boden der Einsatzbohrung 29 und einer stirnseitigen Ringwand 32 des Ventilgehäuses 3' eingespannt gehalten ist. Die Membran 30 ist an der in der Darstellung oberen Seite über einen Steuereingang 33 mit Steuerdruck zum Umschalten des Ventils beaufschlagbar und liegt an ihrer unteren Seite an einer Druckplatte 34 des Schaltkörpers 5' an. Der Schaltkörper 5' weist hier nun zwei in einer senkrecht zu seiner Bewegungsrichtung gelegenen Ebene liegende schneidenförmige Dichtbereiche 6 auf, die - wiederum in Bewegungsrichtung gesehen - innerhalb von zwei zugehörigen Dichtringen 9' des Ventilgehäuses 3' angeordnet sind. Zwischen diesen beiden Dichtringen 9' ist ein Distanzring 12' im Ventilgehäuse 3' eingespannt,dessen beide Einspannflächen 14' einen um den Umschalthub des Schaltkörpers 5' gegenüber dem Abstand der Dichtbereiche 6 vergrößerten Abstand haben. Über seitliche Ausnehmungen 16' ist der Gehäuseinnenraum 4' mit einem seitlichen Mediumanschluß 35 verbindbar. Die beiden anderen Mediumanschlüsse dieses 3/2-Wegeventils sind wiederum mit 1 bzw. 2 bezeichnet.

Die beiden schneidenförmigen Dichtbereiche 6 am Schaltkörper 5' sind hier so ausgebildet, daß der in der Darstellung untere, dem Abluftsitz zugeordnete Dichtbereich etwas größeren Durchmesser und der in der Darstellung obere, dem Zuluftsitz zu geordnete Dichtbereich etwas kleineren Durchmesser als der im Gehäuseinnenraum wiederum über einen O-Ring 23 abgedichtete Führungsbereich 36 aufweist. Weiters ist die Stärke der den Schaltkörper 5' von unten her in seine obere Schaltstellung vorspannenden Feder 25, welche sich an einem Ring 37 in der Bohrung für den Mediumanschluß 2 abstützt, so gewählt, daß sie etwa die Hälfte der über die Membran 30 bzw. den Steuereingang 33 aufbringbaren Kraft ausmacht. Durch die Gemeinsamkeit dieser Maßnahmen wird erreicht, daß das Ventil in einem weiten Druckbereich ein symmetrisches, schnappendes Umschaltverhalten zeigt.

Der Distanzring 12' liegt auch hier wiederum an einem Abstützabsatz 13 im Ventilgehäuse 3' an, wodurch wiederum die Zusammendrückbarkeit des oberen der Dichtringe 9' begrenzt wird. An der Unterseite weist der Distanzring 12' nun selbst einen Abstützabsatz 13 auf, der die Zusammendrückbarkeit des unteren Dichtringes 9' durch den Deckel 27 begrenzt und womit insgesamt eine starre Kraftübertragung vom Deckel 27 über den Distanzring 12'

zum Ventilgehäuse 3' gesichert ist. Zur Verhinderung einer Einstülpung des oberen Dichtrings 9' bei geöffnetem zugehörigen Sitz und Zuströmung des Druckmediums vom Mediumanschluß 1 her ist auch hier wieder der Distanzring 12' mit einer Unterstützungsschulter 15, die bis nahe an den zugehörigen schneidenförmigen Dichtbereich 6 heranreicht, versehen.

Nur der Vollständigkeit halber ist hier noch auf Dichtringe 38 zur Abdichtung des inneren Ventilgehäuses 3' gegen die Einsatzbohrung 29 sowie auf einen Dichtring 39 am Steuereingang 33 zu verweisen.

Die Ausführung nach Fig. 3 entspricht in allen wesentlichen Details der nach Fig. 1, wobei hier zusätzlich noch die Ventilbetätigung über eine Druckmembran entsprechend der Ausführung nach Fig. 2 dargestellt ist. Für gleiche bzw. funktionell idente Teile wird daher in Fig. 3 die Numerierung aus den vorhergehenden Fig. 1 und 2 verwendet und zur Vermeidung von Wiederholungen nur auf die Ausführungen zu den genannten Beispielen verwiesen.

Unterschiedlich ist die Ausführung nach Fig. 3 im wesentlichen nur insofern, als nun hier die Führung und Abdichtung des Schaltkörpers 5 an seiner Unterseite über eine Führungsbüchse 40 erfolgt, welche zufolge ihres Materials bzw. zufolge entsprechend enger Toleranzen zum Schaltkörper 5 auch die Dicht funktion übernimmt. Bei geöffnetem Ventilsitz sitzt hier der Schaltkörper 5 mit seiner schneidenförmigen unteren Stirnfläche 41 an einem elastischen Ring 42 auf, der dann den Hauptteil der Dichtung übernimmt.

Der Deckelteil 17' ist auch hier wiederum in einer Aufnahmebohrung 18 des Ventilgehäuses 3 eingesetzt und über eine O-Ringdichtung 22 abgedichtet.

Der Schaltkörper kann in allen Ausführungen vorzugsweise aus hartem und im Hinblick auf die schneidenförmigen Dichtbereiche präzise bearbeitbarem Material, wie etwa nichtrostendem Stahl oder dergleichen, bestehen - an die sonstigen Teile des Ventils sind keine speziellen Anforderungen zu stellen, sodaß diese beispielsweise aus Aluminium oder auch für den Druck- bzw. Spritzguß geeigneten Werkstoffen bestehen können.

## Patentansprüche

1. Zweistellungs-Sitzventil, mit einem die zu steuernden Mediumanschlüsse aufweisenden Ventilgehäuse und einem in axialer Richtung zur Umschaltung in einem Gehäuseinnenraum bewegbaren Schaltkörper, welcher zumindest einen, im wesentlichen in einer senkrecht zur Bewegungsrichtung des Schaltkörpers gelegenen Ebene liegenden Dichtbereich aufweist, der in seiner geschlossenen Stellung an einem im wesentlichen gegenüber dem Ventilgehäuse feststehenden Dichtbereich anliegt, wobei die zu steuernden Mediumanschlüsse zu beiden Seiten des feststehenden Dichtbereiches in den Gehäuseinnenraum münden, **dadurch gekennzeichnet,** daß jeweils einer der zusammengehörigen Dichtbereich (6,7) am Schaltkörper (5,5') bzw. am Ventilgehäuse (3,3') in Form einer umlaufenden Schneide (8) mit im Querschnitt kleinem Kantenradius ausgeführt ist.

2. Ventil nach Anspruch 1, dadurch gekennzeichnet, daß der schneidenförmige Dichtbereich (6) am Schaltkörper (5,5') und der feststehende Dichtbereich (7) an einem im Ventilgehäuse eingespannten Dichtring (9,9') aus elastischem Material angeordnet ist.

3. Ventil nach Anspruch 1 oder 2, dadurch gekennzeichnet, daß der Durchmesser des schneidenförmigen Dichtbereiches (6) im wesentlichen gleich groß ist wie der Durchmesser des im Gehäuseinnenraum (4) abgedichteten Führungsbereiches (20,36) des Schaltkörpers (5,5').

4. Ventil nach einem der Ansprüche 2 oder 3, dadurch gekennzeichnet, daß bei Ausbildung des Ventils als 3/2-Wegeventil zwei schneidenförmige Dichtbereiche (6) des Schaltkörpers (5') - in Bewegungsrichtung desselben gesehen - innerhalb von zwei zugehörigen Dichtringen (9') liegen und daß zwischen den beiden Dichtringen (9') ein Distanzring (12') im Ventilgehäuse (3') eingespannt ist, der zumindest eine seitliche Ausnehmung (16') aufweist, die in einen (35) der Mediumanschlüsse ausmündet.

5. Ventil nach Anspruch 4, dadurch gekennzeichnet, daß am Ventilgehäuse (3,3') und/oder am Distanzring (12,12') Abstützabsätze (13) zur Begrenzung der Zusammendrückung des Dichtringes (9, 9') vorgesehen sind, die im zusammengebauten Zustand des Ventils am jeweils anderen Bauteil anliegen.

6. Ventil nach einem der Ansprüche 2 bis 5, dadurch gekennzeichnet, daß an den Einspannflächen (14) für den Dichtring (9) am Ventilgehäuse (3) und/oder am Distanzring (12) umlaufende Dichtkanten (11) vorgesehen sind.

7. Ventil nach einem der Ansprüche 2 bis 6, dadurch gekennzeichnet, daß die Einspannfläche (14) für den zuluftseitigen Dichtring (9,9') an der Seite des schneidenförmigen Dichtbereiches (6) in eine Unterstützungsschulter (15) ausläuft, die bis nahe an den schneidenförmigen Dichtbereich (6) heranreicht.

8. Ventil nach einem der Ansprüche 4 bis 7, dadurch gekannzeichnet, daß der zuluftseitige schneidenförmige Dichtbereich (6) etwas kleineren und der abluftseitige schneidenförmige Dichtbereich (6) etwas größeren Durchmesser als der im Gehäuseinnenraum (4') abgedichtete Führungsbereich (36) des Schaltkörpers (5') aufweist und daß der Schaltkörper (5') in unbetätigtem Zustand von einer in axialer Richtung wirkenden Feder (25) in seine, die Zuluft sperrende Endstellung gedrückt ist, wobei in dieser Stellung die Federkraft etwa die Hälfte der vom Betätigungssystem aufbringbaren Kraft ausmacht.

0271479

Fig. 1

Fig. 2

Fig. 3

## EINSCHLÄGIGE DOKUMENTE

EP 87890269.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>US - A - 3 415 284</u> (STAMPFLI)<br>* Gesamt *<br><br>-- | 1;2,6 | F 16 K 11/04<br>F 15 B 13/02 |
| A | <u>CH - A5 - 584 859</u> (HYDRO-PNEUMATIC AB)<br>* Figurenbeschreibung; Fig. 1-3 *<br><br>---- | 1 | |

|  |
|---|
| RECHERCHIERTE SACHGEBIETE (Int. Cl.4) |
| F 16 K 11/00<br>F 15 B 13/00 |

Der vorliegende Recherchenbericht wurde für alle Patentansprüche erstellt.

| Recherchenort | Abschlußdatum der Recherche | Prüfer |
|---|---|---|
| WIEN | 21-03-1988 | ROUSSARIAN |